Europäisches Patentamt

European Patent Office

Office européen des brevets

(19)

(11) Publication number: 0 184 312
A2

(12) **EUROPEAN PATENT APPLICATION**

(21) Application number: 85307792.3

(22) Date of filing: 29.10.85

(51) Int. Cl.⁴: B 60 S 1/08

(30) Priority: 06.12.84 US 678896

(43) Date of publication of application:
11.06.86 Bulletin 86/24

(84) Designated Contracting States:
DE FR GB IT

(71) Applicant: GENERAL MOTORS CORPORATION
General Motors Building 3044 West Grand Boulevard
Detroit Michigan 48202(US)

(72) Inventor: Graham, Donald Ellis
1437 Ambridge Road
Centerville Ohio 45459(US)

(72) Inventor: Kowalik, James Joseph
1666 Mars Hill Dr.
West Carrollton Ohio 45449(US)

(72) Inventor: Kade, Alexander
511 Ogden
Detroit, MI. 48210(US)

(74) Representative: Denton, Michael John et al,
Patent Section - Luton Office (F6) Vauxhall Motors
Limited P.O. Box 3 Kimpton Road
Luton Bedfordshire LU2 0SY(GB)

(54) Apparatus for controlling a vehicle window wiper system.

(57) A control apparatus for separately driven, potentially interfering wiper blades (11, 14) includes position sensors (24, 25) for each wiper blade and a memory (23) which stores, for each pattern, numbers representing inner (26, 27) and outer (26' 27') wipe positions with acceleration, constant velocity and deceleration regions therebetween and a command velocity for the constant velocity regions. The memory further stores numbers defining a zone (29-27', 26-28) of potential blade interference and, for each position of each blade within this zone, a non-interference zone (27-29, 28-26') for the other blade. The control apparatus further includes closed loop velocity control apparatus (18, 21, 23) responsive to the signals from the position sensors and the command velocity to maintain the command velocity in the constant velocity region, accelerate to the command velocity in the acceleration region and decelerate from the command velocity in the deceleration region. The control apparatus also synchronizes the wiper blades at each of the inner and outer wipe positions and includes apparatus responsive to signals from the position sensors indicating that both of the blades are within the zone of potential blade interference to derive from the memory, for the position of the blade in advance in the direction of common blade movement, the non-interference zone for the other blade and prevent the other blade from leaving this zone.

Fig.1

APPARATUS FOR CONTROLLING A VEHICLE
WINDOW WIPER SYSTEM

This invention relates to apparatus for controlling a motor vehicle window wiper system and particularly to such a control apparatus for a system having a pair of potentially interfering wiper blades driven by separate electric motors. In such a system, unlike the more traditional single motor system with mechanical interlocking drive means, there is need for apparatus to ensure that the wiper blades stay in synchronized wiping patterns and do not interfere with each other, even if one of the blades is stopped or otherwise strays far out of synchronization.

Prior art systems have been described which synchronize a pair of separately driven wiper blades on a vehicle window by sensing the arrival of each wiper blade at a predetermined point in its wiping pattern and preventing the first wiper blade to reach that point from proceding until the other wiper blade has also reached its corresponding point. Such points have been suggested as one or both ends of the wipe cycle at the points of reversal of blade motion. It has also been suggested that more points might be used throughout the cycle. See, for example, US Patent No. 4,431,954 and a paper entitled "Electronic Control of Windshield Wiper Systems" by D.E. Graham in Int.J. of Vehicle Design,IAVD Congress on Vehicle Design and Components, 1984, pages H1 to H24.

The suggestions of the prior art have been good, but they can be improved. For example, synchronization only at end points might cause noticeable pauses in the wipe cycle of one wiper blade if the other is driven at an appreciably slower rate or through a significantly longer path. Addition of more numerous check points might also cause annoyingly uneven wiper blade movement. Finally, stoppage of one blade will not necessarily stop the other blade, with the resulting possibility of blade interference.

The object of this invention is not only to synchronize the blades of a wiper system at predetermined synchronization points but also to control the speed of each blade according to a predetermined program to reduce uneven blade movement and, in addition, continually monitor wiper blade position to prevent blade interference.

To this end, apparatus for controlling a vehicle window wiper system is characterised by the features specifed in the characterising portion of Claim 1.

The invention comprises a control apparatus for a vehicle window wiper system having a pair of reversible electric motors effective to drive wiper blades through repeating, synchronized overlapping patterns across a vehicle window and including a position sensor for each wiper blade effective to generate a signal representing the angular position of the wiper blade, first memory means defining, for each pattern, inner and outer wipe positions with acceleration, constant velocity and deceleration regions therebetween and further defining a command velocity for the constant velocity regions, second memory means defining a zone of potential wiper blade interference and, for each position of each wiper blade within this zone, a non-interference zone for the other wiper blade, velocity control means responsive to the signals from the position sensors and effective to derive the velocity of the wiper blades therefrom and the command velocity from the first memory means and deliver electric power to the motors in closed loop control so as to maintain the command velocity in the constant velocity region, accelerate to the command velocity in the acceleration region and decelerate from the command velocity in the deceleration region, synchronization means effective to synchronize the wiper blades at each of the inner and outer wipe positions by stopping each wiper blade as it reaches the position and starting both together in the reverse direction and means responsive to signals from the position sensors indicating that both of the wiper blades are within the zone of potential wiper blade interference to derive from the second memory means, for the position of the wiper blade in advance in the direction of common wiper blade movement, the non-interference zone for the other wiper blade and prevent the other wiper blade from leaving this zone, whereby wiper blade operation is coordinated with controlled velocity, synchronized wipes and prevention of wiper blade interference.

This system thus controls two separately driven wiper blades smoothly without interference. If one wiper blade is stopped, the system senses the fact and stops the other wiper blade short of the position of the stopped wiper blade. This invention is further described by way of example, with reference to the accompanying drawings, in which:-

Figure 1 is a schematic and block diagram of control apparatus for a vehicle window wiper system according to this invention;

Figure 2 is a schematic diagram of a portion of the control apparatus of the system of Figure 1;

Figures 3-5 are flow diagrams describing the operation of the apparatus shown in Figures 1-2;

Figure 6 is a circuit diagram of an electric motor control for use in the apparatus described in the preceding Figures; and

Figures 7a-7c are schematic diagrams describing certain features of the wiper blade patterns in the apparatus of the preceding Figures.

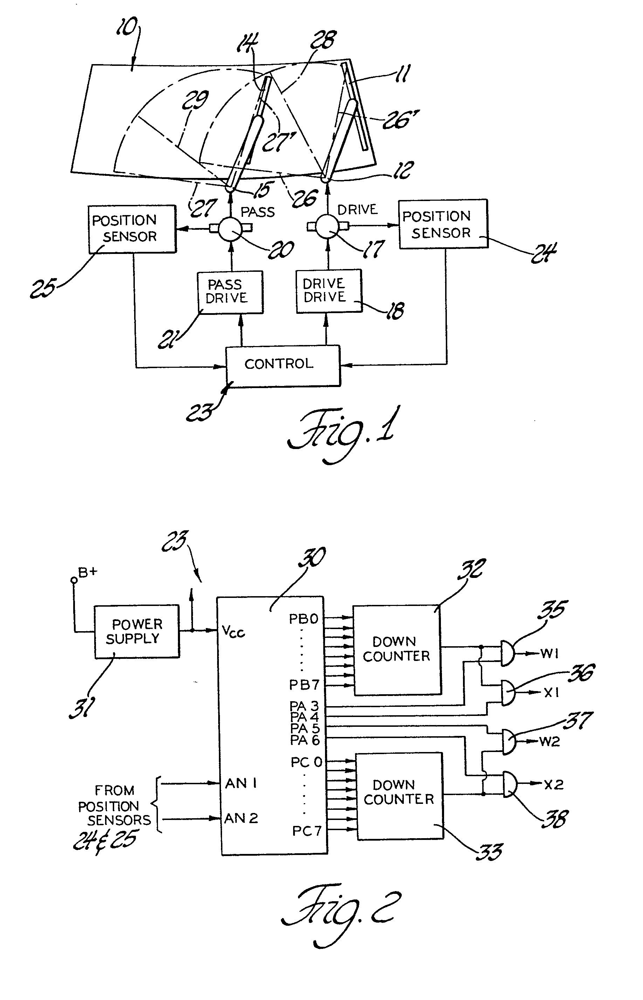

Referring to Figure 1, a motor vehicle window such as windshield 10 includes a driver side wiper blade or DRIV blade 11 pivoted at point 12 below the driver side of the window and a passenger side wiper blade or PASS blade 14 pivoted at point 15 below the approximate centre of the window. The DRIV blade 11 is powered by DRIV motor 17, a reversible DC motor which receives electric power for actuation in either direction selectably from DRIV drive 18. The PASS blade 14 is similarly driven by PASS motor 20, which receives electric power from PASS drive 21. A control 23 controls the actuation of the DRIV and PASS blades 11, 14 through the DRIV and PASS drives 18, 21. The DRIV and PASS blades 11, 14 are driven by their respective DRIV and PASS motors 17, 20 through reduction gear mechanisms and have associated respective rotational position sensors 24, 25. Each of the rotational position sensors 24, 25 follows the rotational position of its respective blade and generates an analogue voltage signal thereof for delivery to the control 23. Potentiometers connected across a stable electric voltage supply are preferred embodiments for the rotational position sensors 24, 25, although the invention is not to be limited to such specific sensors.

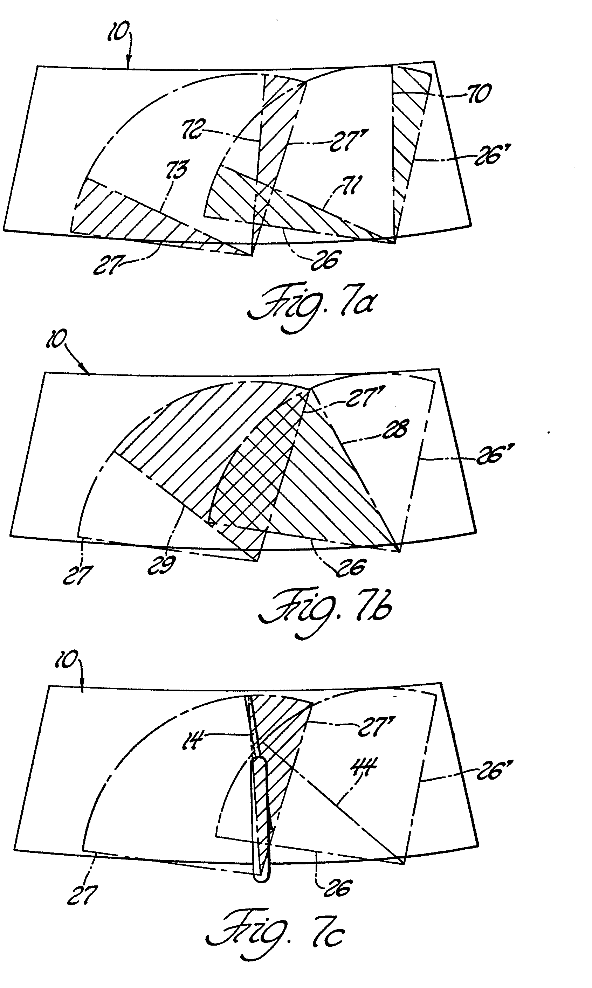

Figure 1 indicates the wiper pattern for each blade on windshield 10 with the blades shown in their extreme outerwipe positions. The innerwipe positions of the DRIV and PASS blades 11, 14 are marked as lines 26, 27. In addition, lines 28, 29 mark, for the DRIV and PASS blades 11, 14, respectively, the limit of movement through which that blade cannot interfere with the other blade. Outerwipe positions are marked in Figures 7a-7c by numerals 26', 27', respectively.

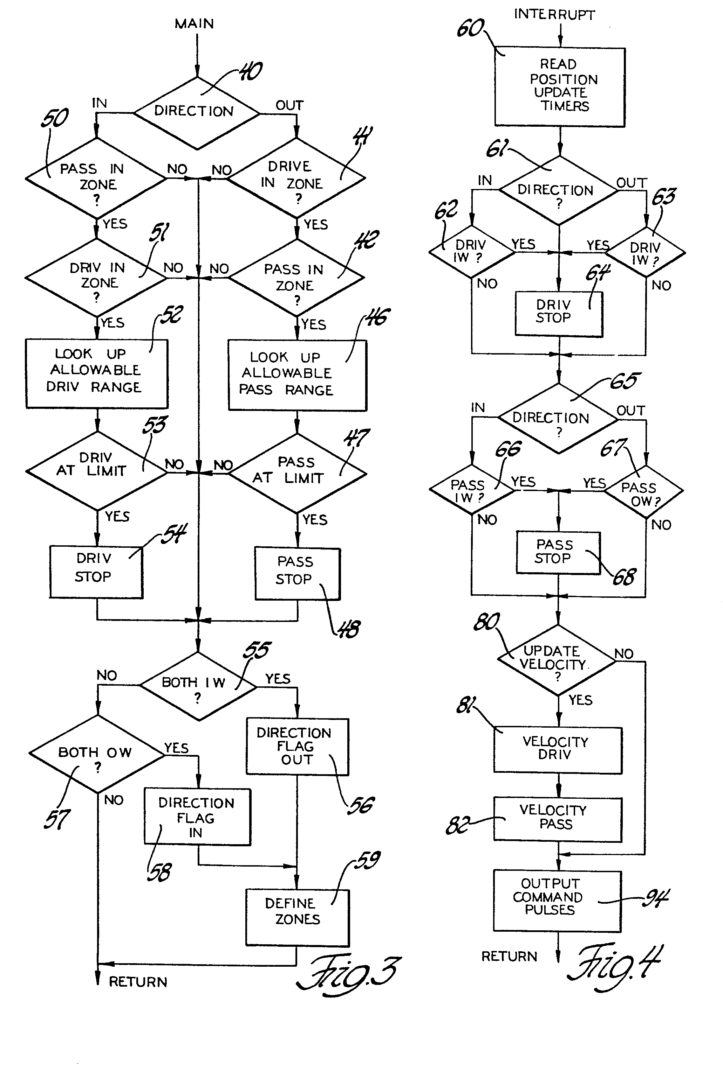

Figure 2 shows an example of control 23, which is built around a digital computer 30. A recommended choice for the digital computer 30, although not the only choice, is a Motorola MC6805R2 (R) one-chip microcomputer. This device includes on-chip central processing unit (CPU), random access memory (RAM), read only memory (ROM), clock, timer, analogue-digital (A-D) converter, digital input and output lines and analogue input lines. The digital computer 30 has a Vcc input connected to a power supply 31, analogue inputs AN1, AN2 connected to the outputs of the rotational position sensors 24, 25, respectively, digital outputs PB0-PB7 connected to a down counter 32 and digital outputs PC0-PC7 connected to a down counter 33. Other pins of the digital computer 30 may be connected in the normal manner.

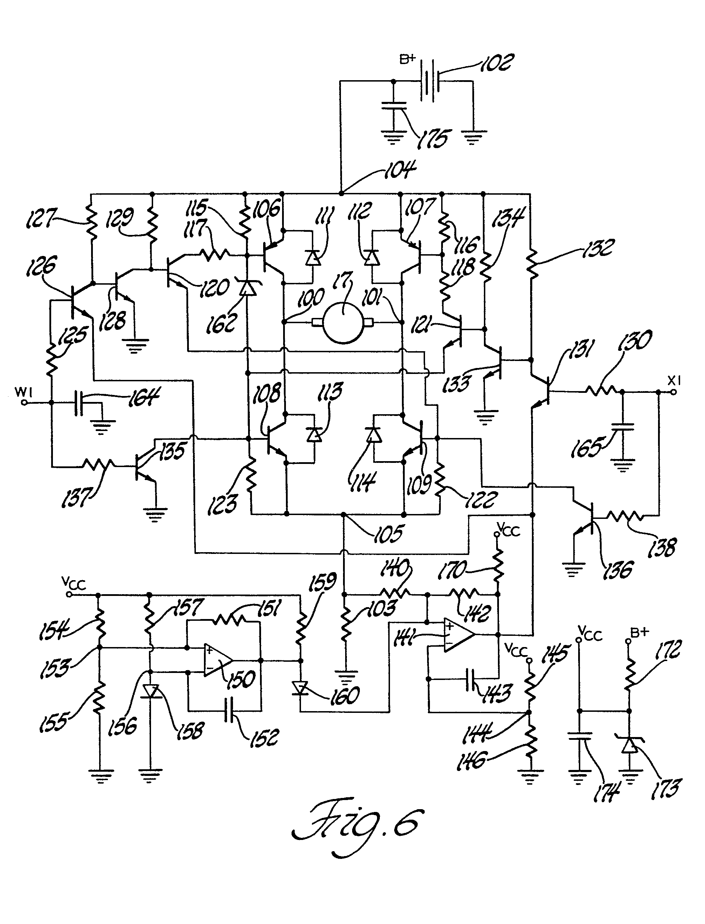

The output of the down counter 32 is connected to one input each of AND gates 35, 36. The AND gate 35 has another input connected to digital output PA3 of the digital computer 30 and an output labelled W1. The AND gate 36 has another input connected to digital output PA4 of the digital computer 30 and an output labelled X1. These outputs W1, X1 are connected to similarly labelled inputs of the motor drive circuit shown in Figure 6, to be described at a later point in this specification. Likewise, the output of the down counter 33 is connected to one input each of AND gates 37, 38. The AND gate 37 has another input from digital output PA5 of the digital computer 30 and an output labelled W2. The AND gate 38 has another input from digital output PA6 of the digital computer 30 and an output labelled X2. The outputs W2, X2 are connected to inputs of another motor drive circuit identical to that shown in Figure 6. The connections between the digital computer 30, the down counters 32, 33 and the AND gates 35-38 are somewhat simplified for purposes of description, since the exact circuitry is not important to this invention, is well known to those who work designing circuits with those or similar devices and is subject to change with the exact devices chosen.

In a brief description, the motor control circuit of Figure 6 provides for selectable actuation of a DC motor in either direction, an off or coast mode and a dynamic brake mode, depending on the four possible states of the two AND gate outputs W1, X1 (W2, X2). This embodiment of this invention uses three of these modes: the two direction actuation modes selected by only W1 high and only X1 high as well as the dynamic brake mode selected by both W1 and X1 high. A more detailed description of the operation of the circuit of Figure 6 will be given at a later point in this specification.

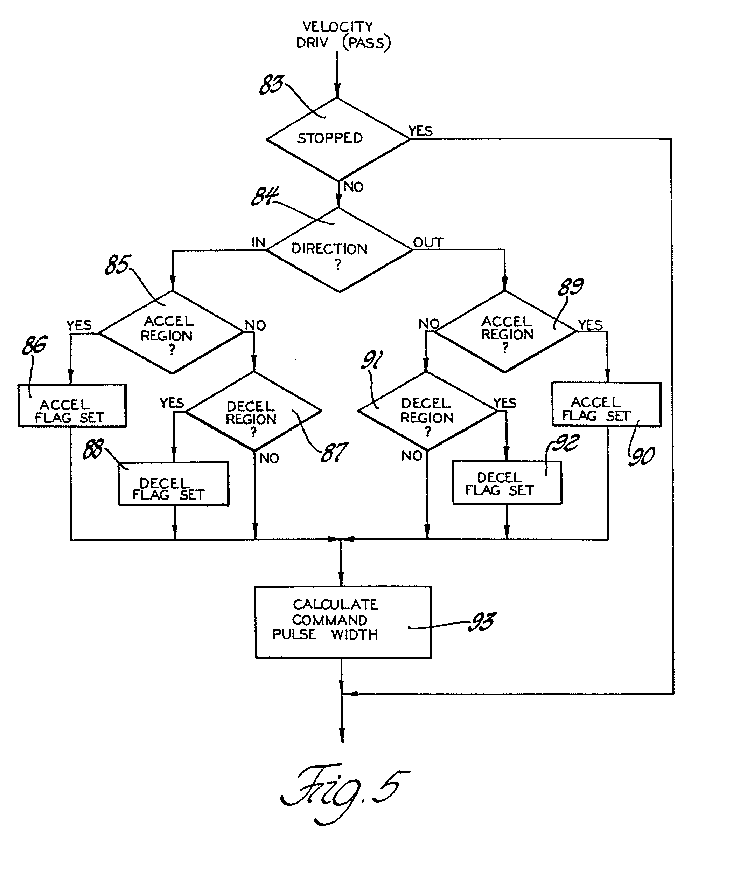

The operation of the system will be described with reference to the flow charts of Figures 3-5 and the schematic diagrams of wiper patterns shown in Figures 7a-7c. Figure 3 describes a MAIN computer routine which runs repeatedly while the wiper system is activated. Figure 4 is an INTERRUPT routine which is run at real time interrupts generated every 700 microseconds, as timed by the timer within the digital computer 30. VELOCITY DRIV (PASS) of Figure 5 is a subroutine which is part of the INTERRUPT routine of Figure 4.

Referring to Figure 3, the MAIN routine begins a portion which stops one blade 11, 14 to prevent interference with the other by checking the direction of the wipers at step 40. This is done by checking a direction flag which has a first value for movement in toward the innerwipe position 26, 27' and another value for movement out toward the outerwipe position 26', 27'. Although a flag may be used for each wiper blade 11, 14, a single flag is used in this embodiment for simplicity since, as will be apparent at a later point in this description, the wiper blades do not move in opposite directions at any time.

If the direction is out, the system next checks at step 41 to see if the DRIV blade 11, which is the leading blade during outward movement, is in the zone of possible blade interference. This is the area on the windshield 10 of Figure 1 to the left of line 28, in which there is a possiblity of blade interference. It is also seen as a cross-hatched area in the wipe pattern of the DRIV blade 11 in Figure 7b.

A byte representing the angular position of the DRIV blade 11 indicated by the line 28 is stored in memory for comparison. If the answer is yes, the system next checks at step 42 to see if the PASS blade 14 is in the zone of possible blade interference, which is the cross-hatched area in the wipe pattern of the PASS blade 14 to the right of line 29 in Figure 7b. A byte representing the angular position of the PASS blade 14 indicated by the line 29 is stored in memory for this comparison.

If the answer is once again yes, the allowable range of the PASS blade 14 for the precise position of the DRIV blade 11 is looked up in memory at step 46 and compared at step 47 to the actual position of the PASS blade 14. There is a single byte representing the limit of such an allowable range for each position of the DRIV blade 14 within the zone of possible blade interference stored in memory. An example for a particular position of the DRIV blade 11 defined by a line 44 is shown in Figure 7c. The cross-hatched area of the wipe pattern of the PASS blade 14 in this Figure is the area of actual blade interference into which the PASS blade 14 should not proceed with the DRIV blade 11 in the position of line 44. Therefore, the angular position representing the position of the PASS blade 14 is stored for the position of the DRIV blade 11 in memory for comparison. If the PASS blade 14 has reached this limit, a PASS stop flag is set at step 48 for the PASS blade 14.

A similar routine is provided for inward movement of the blades 11, 14 starting at direction check step 40 and proceeding at step 50 to determine if the PASS blade 14 is in the zone of possible interference. If it is, the DRIV blade 11 is checked at step 51 for presence in the zone of possible interference. If it is, the allowable DRIV blade range is looked up in memory at step 52 and compared to the actual position at step 53. If the DRIV blade 11 has reached the limit, the DRIV stop flag is set at step 54. This completes the portion of the program which prevents blade interference if one of the blades 11, 14 is far out of synchronization or stopped.

The next portion of the program reverses direction of the blades when they are synchronized at innerwipe positions 26, 27 or outerwipe positions 26', 27'. From either of steps 48 or 54 or from any of the previously described decision points if the answer is not as indicated above, the program proceeds to check at step 55 to see if both blades are at their innerwipe positions 26, 27. If so, the direction flag is set at step 56 to outward movement. If not, the routine checks at decision point 57 to see if both blades 11, 14 are at their outerwipe positions 26', 27'. If so, the direction flag is set at step 58 for inward movement. From either of steps 56 and 58 the routine proceeds to set pointers to the zones of blade interference for movement in the new direction at step 59 before returning to its beginning. The routine returns directly to its beginning from decision point 57 if both blades are not at their outerwipe positions 26', 27'. This completes the portion of the routine which reverses the direction of the blades 11, 14 when they are synchronized at the innerwipe 26, 27 or outerwipe 26', 27' positions.

The INTERRUPT routine, shown in Figure 4, is performed whenever a real time interrupt is initiated by the digital computer 30. It begins at step 60 by reading the digitally converted position values of each of the rotational position sensors 24, 25 and beginning the analogue to digital conversion process for the next readings, which process is performed by the digital computer 30 independently of program control. In addition all timers are updated. The routine then determines at step 61 in which direction the blades 11,14 are moving. The routine determines at step 62, if movement is in, if the DRIV blade 11 has reached its innerwipe position 26 and determines at step 63, if movement is out, if the DRIV blade 11 has reached its outerwipe position 26'. If the answer to either is yes, the DRIV stop flag is set at step 64. From step 64, or from either steps 62 or 63 if the answer is no, the routine proceeds to determine at step 65 if direction is in or out. The routine determines at step 66, if movement is in, if the PASS blade 14 has reached its innerwipe position 27 and determines at step 67, if movement is out, if the PASS blade 14 has reached its outerwipe position 27'. If the answer to either is yes, the PASS stop flag is set at step 68. This completes the part of the routine which stops each blade separately at its outerwipe 26',27' and innerwipe 26,27 positions for blade synchronization.

From step 68, or from either steps 66 or 67 if the answer is no, the routine checks a velocity update timer at step 80 to see if it is time to update the velocity. The system closes the loop on velocity to control the movement of the wiper blades 11,14, in view of the highly variable drag of the window in different operating conditions. This aids in smoothing apparent blade movement, not only by reducing the amount of desynchronization in each half cycle of blade movement, but by allowing programmed blade velocity across the windshield 10. The wipe pattern of each blade 11,14 is divided, as seen in Figure 7a, into three regions: a central region of constant velocity flanked by end regions of acceleration and deceleration. The regions for the DRIV blade 11 are defined by lines 70, 71 of Figure 7a; and the regions for the PASS blade 14 are defined by lines 72, 73. The cross-hatched areas are the acceleration and deceleration regions for each blade 11,14, with acceleration and deceleration being determined by the direction of blade movement. Generally, each blade 11,14 begins from a standing start at one of its outerwipe 26,27 or innerwipe 26,27 positions, accelerates smoothly to a command velocity in the acceleration region, moves with the command velocity through the constant velocity region, decelerates to a minimum velocity in the deceleration region and proceeds at the minimum velocity until the other of the outerwipe and innerwipe positions. The velocity is computed every twentieth interrupt or 14 milliseconds from the present and past positions of each blade 11,14 and compared to a desired velocity for the position of each blade to adjust the power pulses to the motors for closed loop velocity regulation.

The velocity update is performed in the subroutines entitled VELOCITY DRIV and VELOCITY PASS, which are numbered 81, 82 respectively. These subroutines are essentially identical except that one is for the DRIV blade 11 and the other is for the PASS blade 14. The subroutine VELOCITY DRIV 81 is shown in Figure 5. If the stop flag for the DRIV blade 11 is found to be set at step 83, the subroutine is skipped. However, if it is not, the direction of blade movement is determined at step 84. If in, presence in the acceleration region is checked at step 85. If it is the acceleration region, an acceleration flag is set at step 86. If it is not, presence in the deceleration region is checked at step 87. If so, a deceleration flag is set at step 88. A similar arrangement is provided for movement in the out direction, with determination of acceleration region at step 89, setting of the acceleration flag at step 90, determination of the deceleration region at step 91 and setting of the deceleration flag at step 92. If neither the acceleration nor the deceleration flag is set, the constant velocity region is assumed.

Regardless of which flag is set, the subroutine next proceeds to calculate a command pulse width at step 93 for output to the DRIV drive 18. The velocity of the DRIV blade 11 is computed by subtracting the previous position signal for the DRIV blade stored temporarily in memory from the present position signal and then scaling the result. The pulse widths and the velocities are scaled relative to each other so that they can be directly added and subtracted to limit the change of velocity in the acceleration and deceleration regions to a maximum of about 10 percent per velocity adjustment. The actual calculation is performed by taking the previous pulse width, adding the desired velocity and subtracting the actual velocity. The desired velocity depends on the region: the command velocity for the acceleration and constant velocity regions and the minimum velocity for the deceleration region.

The final step in the calculation is comparison with predetermined minimum and maximum values with replacement by the minimum value if the calculated value is less or by the maximum value if the calculated value is greater. The minimum value is important since, without it, the DRIV blade 11 would decelerate to a stop in the deceleration region without ever reaching the innerwipe 26 or outerwipe 26' position. The maximum value is important to prevent blade velocity from overshooting the command velocity within the acceleration region before reaching the constant velocity region.

Referring back to Figure 4, when the output command pulse for the DRIV drive 18 has been computed in the VELOCITY DRIV subroutine 81, a similar command pulse for the PASS drive 21 is computed in the similar VELOCITY PASS subroutine 82; and the command pulses are then output at step 94 on lines PB0-PB7 to the down counter 32 and on lines PC0-PC7 to the down counter 33. The outputs on lines PA3-PA6 are controlled by the STOP and direction flags for each motor 17,20. For example, a STOP flag set for the DRIV motor 17 causes high outputs on lines PA3-PA4 to produce high outputs at W1, X1. In addition, the maximum pulse width is output on lines PB0-PB7, rather than that calculated in the step 93, for maximum dynamic braking. However, with the STOP flag reset, the direction flag causes one of lines PA3, PA4 to go low so that only W1 or X1 is sent high when the down counter 32 is triggered for a time determined by the number determined in the step 93 and stored therein. Thus signals are sent to the DRIV drive 18 to pulse width modulate the power to the DRIV motor 17 and thus control its velocity or to dynamically brake the DRIV motor 17 to an immediate stop.

In this embodiment, as previously described, the trailing blade 11,14 is stopped short of collision with the leading blade 11,14 if such collision is found to be imminent. Although this is sufficient for purposes of this description, it should be clear that other action may be programmed to follow. For example, the trailing blade or both blades 11,14 could be reversed to return to the last innerwipe 26,27 or outerwipe 26',27' position, with another attempt at normal operation after a suitable delay period. Alternatively, the trailing blade 11,14 may continue its wipe cycle through a shortened arc determined by the allowable positions for the position of the leading blade 11,14. Other possibilities will be apparent to those skilled in the art in view of this disclosure.

Figure 6 illustrates a motor control circuit for use in the control system described above. The circuit corresponds to the DRIV drive 18 and controls the DRIV motor 17; a similar circuit corresponds to the PASS drive 21. The circuit has two input terminals (W1, X1) and is capable of producing motor actuation in either direction, stopping motor actuation or dynamically braking the DRIV motor 17, depending on the combination of the two inputs.

Referring to Figure 6, the DRIV motor 17 is connected across two bridge terminals 100, 101 of a bridge circuit with a power supply symbolized by battery 102 (B+, ground) and a series resistor 103 connected across the other bridge terminals 104, 105. PNP transistors 106, 107 have emitters connected to the bridge terminal 104 and collectors connected, respectively, to the bridge terminals 100, 101. NPN transistors 108, 109 have emitters connected to the bridge terminal 105 and collectors connected, respectively, to the bridge terminals 100, 101. The PNP & NPN transistors 106-109 have freewheeling diodes 111-114, respectively, connected across emitter to collector in the usual manner. The bases of the PNP transistors 106, 107 are connected to the battery 102 (B+) through resistors 115, 116, respectively, and through resistors 117, 118, respectively, to the collectors of NPN transistors 120, 121, respectively. The NPN transistor 120 has an emitter connected to the base of the NPN transistor 109 and through a resistor 122 to the bridge terminal 105. Likewise, the NPN transistor 121 has an emitter connected to the base of the NPN transistor 108 and through a resistor 123 to the bridge terminal 105. Thus the NPN transistor 120 may be actuated to cause conduction in the PNP and NPN transistors 106, 109 for actuation of the DRIV motor 17 in one direction; and the NPN transistor 121 may be actuated to cause conduction of the PNP and NPN transistors 107, 108 for actuation of the DRIV motor 17 in the opposite direction.

For the actuation of the NPN transistor 120, the input terminal marked W1 is connected through a resistor 125 to the base of an NPN transistor 126 having an emitter grounded in a manner to be later described and a collector connected through a resistor 127 to the battery 102 (B+) and also connected to the base of an NPN transistor 128. The NPN transistor 128 has a grounded emitter and a collector connected through a resistor 129 to the battery 102 (B+) and also connected to the base of transistor 120. Thus a high voltage on input W1 turns the NPN transistor 126 on, the NPN transistor 128 off and the NPN transistor 120 on to actuate the DRIV motor 17 in one direction. On the opposite side, the input terminal marked X1 is connected through a resistor 130 to the base of an NPN transistor 131 having an emitter grounded in a manner to be later described and a collector connected through a resistor 132 to the battery 102 (B+) and also connected to the base of an NPN transistor 133. The NPN transistor 133 has a grounded emitter and a collector connected through a resistor 134 to the battery 102 (B+) and also connected to the base of the NPN transistor 121. Thus a high voltage on the input terminal X1 turns the NPN transistor 131 on, the NPN transistor 133 off and the NPN transistor 121 on to actuate the DRIV motor 17 in the opposite direction. If the voltages at the input terminals W1 and X1 are both low, the NPN transistors 120, 121 are turned off to turn off the PNP and NPN transistors 106-109 and open the armature circuit of the DRIV motor 17.

In order to provide the dynamic braking mode of operation for the DRIV motor 17, NPN transistors 135, 136 are provided. The NPN transistor 135 has a base connected through a resistor 137 to the input terminal Wl, a grounded emitter and a collector connected to the base of the NPN transistor 108 to shunt base drive from the NPN transistor 108 whenever a high voltage appears at the input terminal Wl. Likewise, the NPN transistor 136 has a base connected through a resistor 138 to the input terminal Xl, a grounded emitter and a collector connected to the base of the NPN transistor 109 to shunt base current from the NPN transistor 109 when a high voltage appears at the input terminal Xl. If only one of the input terminals Wl, Xl is given a high voltage, then one of the NPN transistors 108, 109 not in the actuated motor armature circuit is held off. However, if both the input terminals Wl, Xl are given a high voltage, both the NPN transistors 108, 109 are held off while both the PNP transistors 106, 107 are actuated to remove the battery 102 from the armature circuit of the DRIV motor 17 but establish dynamic braking paths through the PNP transistor 106 and the freewheeling diode 112 and through the PNP transistor 107 and the freewheeling diode 111. The path which is effective depends on the direction of rotation of the armature of the DRIV motor 17.

Overcurrent protection is provided for the circuit of Figure 6. The bridge terminal 105 is connected through a resistor 140 to the non-inverting input of a comparator 141 having a positive feedback resistor 142 and a negative feedback capacitor 143. The inverting input of the comparator 141 is connected to the junction 144 of a voltage divider comprising resistors 145, 146 connected from Vcc to ground. The output of the comparator 141 is connected through a resistor 170 to Vcc and also directly to the emitters of the NPN transistors 126, 131. Thus the current path to ground from these emitters is through the output transistor of the comparator 141, when the voltage at the inverting input exceeds that at the non-inverting input. The armature current of the DRIV motor 17 flows through the series resistor 103 and generates a voltage at the non-inverting input of the comparator 141 proportional to the current level. This voltage is compared to a fixed reference voltage from the junction 144 to open the emitter circuits of the NPN transistors 126, 131 and thus open the armature circuit of the DRIV motor 17 if the armature current of the DRIV motor 17 increases beyond a predetermined limit.

Thermal protection is also provided for the circuit of Figure 6. A comparator 150 has a positive feedback resistor 151, a negative feedback capacitor 152, a non-inverting input provided with a fixed voltage from junction 153 of a voltage divider comprising resistors 154, 155 connected from Vcc to ground and an inverting input provided with a voltage varying with temperature from junction 156 of a voltage divider comprising resistor 157 and diode 158 connected from Vcc to ground. The output of the comparator 150 is connected to Vcc through a resistor 159 and also through a diode 160 to the non-inverting input of the comparator 141. The diode 158 provides a temperature dependent voltage at the junction 156, which is compared to a fixed reference voltage from the junction 153. If the temperature is lower than a predetermined limit, the output of the comparator 150 is held low so that it does not affect the voltage at the non-inverting input of the comparator 141.
However, if the temperature exceeds that limit, the
output of the comparator 150 allows the battery 102
voltage to generate a current through the resistor
159, the diode 160 and the resistors 140, 103 in series
to provide a voltage at the non-inverting input of the
comparator 141 sufficiently high to cause opening of
the armature circuit of the DRIV motor 17 as described
in the last paragraph.

The power supply for the circuit of Figure 6
includes a terminal connected to battery 102 (B+) and
through a resistor 172 to a terminal labelled Vcc. The
Vcc terminal is also connected to ground through a 7.5
volt zener diode 173 and a capacitor 174 in parallel.
For protection of the circuit of Figure 6, a 28 volt
zener diode 162 is connected across the bases of the
PNP and NPN transistors 106, 108 to turn on both
transistors and provide a current path to ground in
case of overvoltage on the power line such as that
produced by the operation of a motor vehicle alternator
with the battery 102 disconnected. In addition,
capacitors 164, 165 may be provided to ground from the
input terminals W1, X1, respectively, and capacitor 175
from the battery 102 (B+) to ground to shunt spurious
voltage spikes.

Sample values for selected circuit components in the circuit of Figure 6 are as follows:

### Resistors

103 - 0.01 ohm

117, 118 - 27 ohm, high power

115, 116, 122, 123, 137, 138, 140 - 100 ohm

129, 134, 172 - 510 ohm

159 - 2K

127, 132 - 4.7K

170 - 5K

125, 130 - 10K

146 - 1.2K, 1%

155 - 1.37K, 1%

142 - 5K, 1%

145, 154, 157 - 30K, 1%

151 - 33K, 1%

### Capacitors

143, 152 - 2.2 pf

164, 165 - 0.01 microf

174, 175 - 0.1 microf

0184312

Claims:

1. Apparatus for controlling a vehicle window wiper system having a pair of reversible electric motors (17,20) effective to drive wiper blades (11,14) through repeating, synchronized overlapping patterns across a vehicle window (10), the control apparatus comprising, a position sensor (24,25) for each wiper blade effective to generate a signal representing the angular position of the wiper blade; memory means (30) defining, for each pattern, inner (26,27) and outer (26',27') wipe positions with acceleration, constant velocity and deceleration regions (27-73-72-27',26-71-70-26') therebetween and further defining a command velocity for the constant velocity regions; and velocity control means (18,21,23) responsive to the signals from the position sensors and effective to derive the velocities of the wiper blades therefrom and the command velocity from the memory means and deliver electric power to the motors in closed loop control so as to maintain the command velocity in the constant velocity region, accelerate to the command velocity in the acceleration region and decelerate from the command velocity in the deceleration region; the apparatus being characterised by synchronization means (24,25,30) effective to synchronize the wiper blades at each of the inner and outer wipe positions by stopping each wiper blade as it reaches the position and starting both together in the reverse direction; by the memory means further defining a zone (26-28,29-27') of potential wiper blade interference and, for each position of each wiper blade within this zone, a non-interference zone (27-29,28-26') for the other wiper blade; and by means (30) responsive to signals

0184312

from the position sensors indicating that both of the
wiper blades are within the zone of potential wiper
blade interference to derive from the memory means, for
the position of the wiper blade in advance in the
direction of common wiper blade movement, the
non-interference zone for the other wiper blade and
prevent the other wiper blade from leaving this zone,
whereby wiper blade operation is coordinated with
controlled velocity, synchronized wipes and prevention
of wiper blade interference.

2. Apparatus as claimed in Claim 1,
characterised in that, the memory means (30) defines, a
zone (26-28,29-27') of potential blade interference for
each wiper blade (11,14) and, for each position of each
wiper blade within its respective zone of potential
interference, a stop number defining a non-interference
zone for the other wiper blade; and in that the signal
responsive means (30) indicates that both of the wiper
blades are within their respective zones of potential
interference to derive from the memory means, for
the position of the wiper blade in advance in the
direction of common wiper blade movement, the stop
number indicating the non-interference zone for the
other wiper blade and stop the other wiper blade when
the signal from the position sensor (24,25) for the
other wiper blade corresponds to the stop number.

3. Apparatus as claimed in Claim 1 or
Claim 2, characterised in that the memory means (30) is
effective to store numbers defining, for each pattern,
inner (26,27) and outer (26',27') wipe positions and
boundaries for central constant velocity regions
flanked by acceleration and deceleration regions and further effective to store a number representing a command velocity for the constant velocity regions and a minimum velocity, the memory means further being effective to store a number for each wiper blade (11,14) defining a zone (26-28,29-27') of potential wiper blade interference and to store, for each position of each wiper blade within its respective zone of potential interference, a stop number defining a non-interference zone for the other wiper blade; and in that the velocity control means (18,21,23) is effective to derive the velocities of the blades from successsive position signals from the position sensors (24,25) and further responsive to said derived velocities and the command velocity to deliver output electric power pulses to the motors (17,20) in the closed loop control.

Fig.1

Fig.2

MAIN

*40* — DIRECTION

*50* — IN — PASS IN ZONE ? — NO NO — DRIVE IN ZONE ? — *41* — OUT

YES

*51* — DRIV IN ZONE ? — NO NO — PASS IN ZONE ? — *42*

YES

*52* — LOOK UP ALLOWABLE DRIV RANGE

YES — LOOK UP ALLOWABLE PASS RANGE — *46*

*53* — DRIV AT LIMIT — NO NO — PASS AT LIMIT — *47*

YES — YES

*54* — DRIV STOP

PASS STOP — *48*

*55* — BOTH I W ? — NO — YES — DIRECTION FLAG OUT

*56*

BOTH O W ? — YES — DIRECTION FLAG IN

*57* — NO — *58*

DEFINE ZONES — *59*

RETURN

*Fig.3*

INTERRUPT

*60* — READ POSITION UPDATE TIMERS

*61* — IN — DIRECTION ? — OUT — *63*

*62* — DRIV IW ? — YES YES — DRIV IW ?

NO — DRIV STOP — *64* — NO

*65* — IN — DIRECTION ? — OUT — *67*

*66* — PASS IW ? — YES YES — PASS OW ?

NO — PASS STOP — *68* — NO

*80* — UPDATE VELOCITY ? — NO

YES

*81* — VELOCITY DRIV

*82* — VELOCITY PASS

OUTPUT COMMAND PULSES — *94*

RETURN

*Fig.4*

VELOCITY
DRIV (PASS)

83 STOPPED — YES

NO

84 DIRECTION ?

IN — 85 ACCEL REGION ?

OUT — 89 ACCEL REGION ?

YES — 86 ACCEL FLAG SET

NO — 87 DECEL REGION ?

YES — 88 DECEL FLAG SET

NO

NO — 91 DECEL REGION ?

YES — 92 DECEL FLAG SET

NO

YES — 90 ACCEL FLAG SET

CALCULATE COMMAND PULSE WIDTH 93

*Fig.5*

*Fig. 6*

0184312

*Fig. 7a*

*Fig. 7b*

*Fig. 7c*